# EUROPEAN PATENT APPLICATION

(11) **EP 4 632 682 A1**
(43) Date of publication of application: **15.10.2025**
(21) Application number: 23925985.6
(22) Date of filing: 23.10.2023
(51) Int. Cl.: G06T 15/60

(54) **SHADOW RENDERING METHOD AND APPARATUS, COMPUTER DEVICE, AND STORAGE MEDIUM**

(30) Priority: 08.03.2023 CN 202310258041
(71) Applicant: Tencent Technology (Shenzhen) Company Limited, Shenzhen, Guangdong 518057 (CN)
(72) Inventor: JIANG, Zheng, Shenzhen, Guangdong 518057 (CN); ZHANG, Yingpeng, Shenzhen, Guangdong 518057 (CN)
(74) Representative: EP&C
(86) International application number: PCT/CN2023/125911
(87) International publication number: WO 2024/183288

(57) **Abstract**

This application relates to a virtual scene image rendering method and apparatus, a computer device, and a storage medium. The method relates to the field of rendering and games, and includes: obtaining a first space position corresponding to a pixel point of a screen displaying a virtual scene (202); determining, for the pixel point and from a plurality of light sources in the virtual scene, a target light source whose illumination area includes the virtual space position of the pixel point (204); obtaining a second space position of the target light source (206); performing ray tracing based on the position of the target light source and the position of the pixel point, to obtain lighting information of the target light source for the pixel point, the lighting information indicating whether a virtual ray generated by the target light source reaches the position of the pixel point (208); and performing virtual scene image rendering on the virtual scene based on the lighting information, to obtain a virtual scene image rendering result (210).

## Description

### RELATED APPLICATION

This application claims priority to Chinese Patent Application No. 202310258041X, entitled "VIRTUAL SCENE IMAGE RENDERING METHOD AND APPARATUS, COMPUTER DEVICE, AND STORAGE MEDIUM" and filed on March 8, 2023, which is incorporated herein by reference in its entirety.

### FIELD OF THE TECHNOLOGY

This application relates to the field of rendering technologies, and in particular, to a virtual scene image rendering method and apparatus, a computer device, and a storage medium.

### BACKGROUND OF THE DISCLOSURE

With the development of computer technologies, a virtual scene image rendering technology appears. The virtual scene image rendering technology is configured for rendering to obtain a shadow, to improve a sense of realism of a rendering result.

In a conventional technology, virtual scene image rendering is performed by using a shadow map generally. Calculation complexity of a shadow map-based rendering method is greatly related to complexity of a scene that needs to be rendered. Higher complexity of the scene indicates a higher requirement on performance.

Therefore, in a case that complexity of a scene is high, for example, there are a large number of light sources in the scene, a problem of high calculation complexity exists in the shadow map-based rendering method. As a result, virtual scene image rendering efficiency is low, and a large number of hardware computer resources need to be occupied, resulting in a waste of hardware computer resources configured for supporting virtual scene image rendering.

### SUMMARY

According to various embodiments provided in this application, a virtual scene image rendering method and apparatus, a computer device, a computer-readable storage medium, and a computer program product are provided.

According to an aspect, this application provides a virtual scene image rendering method. Performed by a computer device, the method includes: obtaining a first space position corresponding to a pixel point of a screen displaying a virtual scene; determining, for the pixel point and from a plurality of light sources in the virtual scene, a target light source whose illumination area includes the virtual space position of the pixel point; obtaining a second space position of the target light source; performing ray tracing based on the position of the target light source and the position of the pixel point, to obtain lighting information of the target light source for the pixel point, the lighting information indicating whether a virtual ray generated by the target light source reaches the position of the pixel point; and performing virtual scene image rendering on the virtual scene based on the lighting information, to obtain a virtual scene image rendering result.

According to another aspect, this application further provides a virtual scene image rendering apparatus. The apparatus includes: a first location determining module, configured to obtain a first space position corresponding to a pixel point of a screen displaying a virtual scene; a light source determining module, configured to determine, for the pixel point and from a plurality of light sources in the virtual scene, a target light source whose illumination area includes the virtual space position of the pixel point; a second location determining module, configured to obtain a second space position of the target light source; an information obtaining module, configured to perform ray tracing based on the position of the target light source and the position of the pixel point, to obtain lighting information of the target light source for the pixel point, the lighting information indicating whether a virtual ray generated by the target light source reaches the position of the pixel point; and a virtual scene image rendering module, configured to perform virtual scene image rendering on the virtual scene based on the lighting information, to obtain a virtual scene image rendering result.

According to another aspect, this application further provides a computer device. The computer device includes a memory and one or more processors, the memory having computer-readable instructions stored therein, the computer-readable instructions, when executed by the processor, causing the one or more processors to perform the foregoing virtual scene image rendering method.

According to another aspect, this application further provides one or more non-volatile readable storage media. The readable storage media have computer-readable instructions stored therein, the computer-readable instructions, when executed by one or more processors, causing the one or more processors to implement the foregoing virtual scene image rendering method.

According to another aspect, this application further provides a computer program product. The computer program product includes computer-readable instructions, the computer-readable instructions, when executed by a processor, implementing the foregoing virtual scene image rendering method.

Details of one or more embodiments of this application are provided in accompanying drawings and description below. Other features, objectives, and advantages of this application are to become apparent from the specification, the accompanying drawings, and the claims.

### BRIEF DESCRIPTION OF THE DRAWINGS

To describe technical solutions in embodiments of this application more clearly, the following briefly describes the accompanying drawings required for describing the embodiments. Apparently, the accompanying drawings in the following descriptions show merely some embodiments of this application, and a person of ordinary skill in the art may still derive other drawings from these accompanying drawings without creative efforts.
FIG. 1 is a diagram of an application environment of a virtual scene image rendering method according to some embodiments.
FIG. 2 is a schematic flowchart of a virtual scene image rendering method according to some embodiments.
FIG. 3A is a schematic diagram of a two-dimensional grid according to some embodiments.
FIG. 3B is a schematic diagram of intersection between projection areas and cells according to some embodiments.
FIG. 4 is a real-time rendering picture obtained when virtual scene image rendering is not performed according to some embodiments.
FIG. 5 is a real-time rendering picture obtained when virtual scene image rendering is performed according to some embodiments.
FIG. 6 is a schematic flowchart of determining light source access information according to some embodiments.
FIG. 7 is a schematic flowchart of a virtual scene image rendering method according to some embodiments.
FIG. 8 is a block diagram of a structure of a virtual scene image rendering apparatus according to some embodiments.
FIG. 9 is a block diagram of an internal structure of a computer device according to some embodiments.
FIG. 10 is a block diagram of an internal structure of a computer device according to some embodiments.

### DESCRIPTION OF EMBODIMENTS

The following clearly and completely describes the technical solutions in embodiments of this application with reference to the accompanying drawings in the embodiments of this application. Apparently, the described embodiments are merely some but not all of the embodiments of this application. All other embodiments obtained by a person of ordinary skill in the art based on the embodiments of this application without creative efforts shall fall within the protection scope of this application.

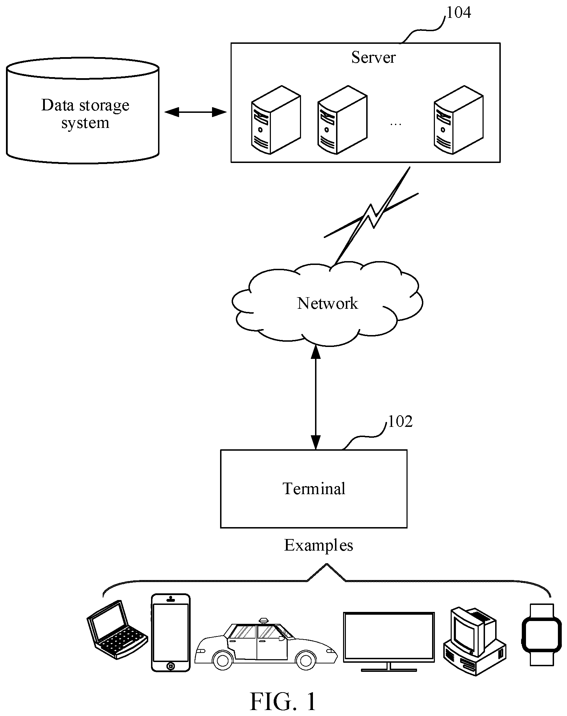

A virtual scene image rendering method provided in the embodiments of this application may be applied to an application environment shown in FIG. 1. A terminal 102 communicates with a server 104 through a network. A data storage system may store data that the server 104 needs to process. The data storage system may be integrated on the server 104, or may be placed on a cloud or another server.

Specifically, the terminal 102 may obtain a virtual scene from the server 104, and for each pixel point in screen space, the terminal 102 may determine, from a plurality of light sources in the virtual scene, a light source whose illumination area includes a world space location of the pixel point, to obtain a target light source corresponding to the pixel point. The terminal 102 may perform ray tracing based on a world space location of the target light source and the world space location of the pixel point, to obtain light source access information of the target light source for the pixel point, the light source access information representing whether the target light source illuminates the world space location of the pixel point; and perform virtual scene image rendering on the virtual scene based on the light source access information, to obtain a virtual scene image rendering result. The terminal 102 may display the virtual scene image rendering result, or may transmit the virtual scene image rendering result to the server 104.

The terminal 102 may be, but not limited to, a desktop computer, a notebook computer, a smartphone, a tablet computer, an Internet of Things device, or a portable wearable device. The Internet of Things device may be a smart speaker, a smart television, a smart air conditioner, a smart in-vehicle device, or the like. The portable wearable device may be a smart watch, a smart band, a head-mounted device, or the like. The server 104 may be an independent physical server, or may be a server cluster including a plurality of physical servers or a distributed system, or may be a cloud server providing basic cloud computing services, such as a cloud service, a cloud database, cloud computing, a cloud function, cloud storage, a network service, cloud communication, a middleware service, a domain name service, a network security service such as cloud security or host security, a content delivery network (CDN), big data, and an artificial intelligence platform. The terminal 102 and the server 104 may be directly or indirectly connected in a wired or wireless communication manner. This is not limited in this application.

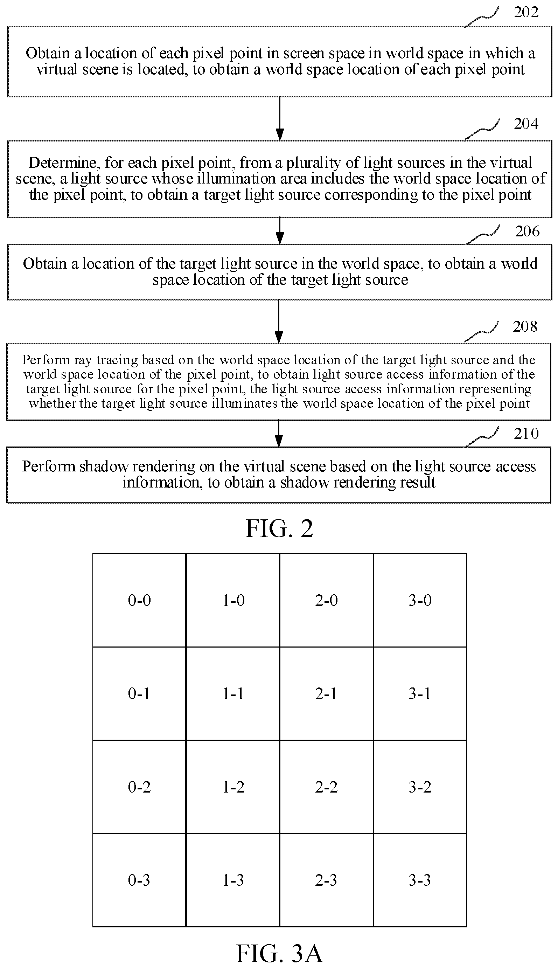

In some embodiments, as shown in FIG. 2, a virtual scene image method (that is, a shadow rendering method) is provided. The method may be performed by a terminal or a server, or may be jointly performed by a terminal and a server. An example in which the method is applied to the terminal 102 in FIG. 1 is used for description, and the following operations are included.

Operation 202: obtain a first space position corresponding to a pixel point of a screen displaying a virtual scene. In embodiments of the present application, the first space position can be a virtual space position or a real space position, and operation 202 can also include following operations: obtain a location of each pixel point in screen space in world space in which a virtual scene is located, to obtain a world space location of each pixel point.

Specifically, for each pixel point, the terminal may obtain a location of the pixel point in the screen space, convert the location of the pixel point in the screen space to the location in the world space, and use the location obtained through conversion as the world space location of the pixel point.

Operation 204: determine, for the pixel point and from a plurality of light sources in the virtual scene, a target light source whose illumination area includes the virtual space position of the pixel point. In embodiments of the present application, operation 204 can include following operations: determine, for each pixel point, from a plurality of light sources in the virtual scene, a light source whose illumination area includes the world space location of the pixel point, to obtain a target light source corresponding to the pixel point.

The virtual scene is a scene that is virtual and that is displayed (or provided) when an application program is run on the terminal. The virtual scene may be a simulated environment scene of a real world, or may be a semi-simulated semi-fictional three-dimensional environment scene, or may be an entirely fictional three-dimensional environment scene. The virtual scene may be any one of a two-dimensional virtual scene, a 2.5-dimensional virtual scene, or a three-dimensional virtual scene.

The light source is an object, such as the sun, an electric light, or a burning substance, that can automatically emit light and that is emitting light. The light source in the virtual scene is a series of illumination data that can realistically simulate an illumination effect of a light source in reality. The illumination area of the light source is an area that can be illuminated by the light source. The illumination area of the light source may be any one of a spherical area or a tapered area. In a case that the illumination area of the light source is spherical, the illumination area of the light source may be referred to as a range ball of the light source. The target light source corresponding to the pixel point is the light source whose illumination area includes the world space location of the pixel point.

The world space is three-dimensional space in which the virtual scene is located. A size of the world space may be customized. For example, the world space is three-dimensional space with a length of 100 meters, a width of 100 meters, and a height of 100 meters. The world space location is a location in the world space. The screen space is two-dimensional space of a screen, a size of the screen space is a size of the screen, measured in pixels.

Specifically, the terminal may distribute a two-dimensional grid on a preset plane in the world space in which the virtual scene is located. A location of the two-dimensional grid on the preset plane may be updated in real time. For example, during real-time rendering, the location of the two-dimensional grid on the preset plane may be updated in real time based on real-time switching of a picture, so that a light source in a target light source cluster obtained through clustering by using the two-dimensional grid may cover a light source participating in the real-time rendering. The plurality of light sources in the virtual scene may be all or a part of light sources in the virtual scene, and for example, may be light sources whose projection areas intersect with the two-dimensional grid in the virtual scene. The projection area of the light source is a projection area of an illumination area of the light source on the preset plane. The plurality of light sources in the virtual scene may be stored in a buffer of a graphics processing unit (GPU), and the two-dimensional grid may also be stored in the GPU.

The preset plane may be arranged as required. For example, the virtual scene includes a ground, the ground may also be referred to as a horizontal plane, and the preset plane may be a plane parallel to the horizontal plane, or the horizontal plane may be used as the preset plane. The preset plane may alternatively be a plane having a preset angle with the horizontal plane. The preset angle may be set as required, for example, may be 0 degrees to 90 degrees. A value of the preset angle is not limited herein. The two-dimensional grid has a specific size and shape. The size and shape of the two-dimensional grid may be preset as required. For example, the shape of the two-dimensional grid is rectangular, and a length and width of the two-dimensional grid may be set as required. The two-dimensional grid includes a plurality of cells. A shape of the cell includes, but is not limited to, at least one of a rectangle or a triangle. Sizes of the cells in the two-dimensional grid may be the same or may be different. FIG. 3A is a schematic diagram of a two-dimensional grid. The two-dimensional grid in FIG. 3A has 16 cells in total. A location of the cell may be indicated by using a row and a column. Numbers in each cell indicate a location of the cell. For example, "0-0" indicates a cell in the 0^{th} row and the 0^{th} column, and "1-1" indicates a cell in the 1^{st} row and the 1^{st} column.

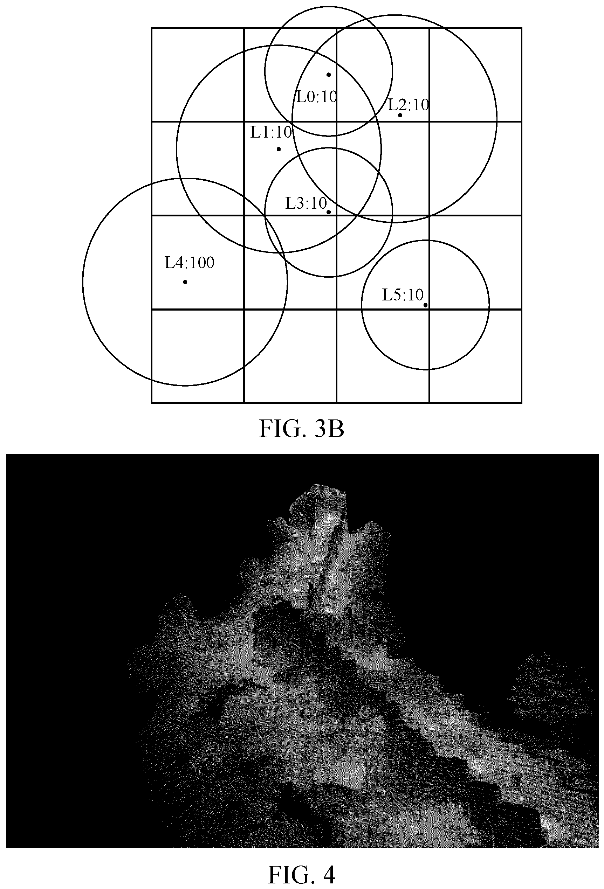

In some embodiments, the terminal may determine respective projection areas of illumination areas of the plurality of light sources on the preset plane, and for each cell in the two-dimensional grid, obtain a target light source cluster corresponding to the cell based on light sources whose projection areas intersect with the cell. FIG. 3B is a schematic diagram of intersection between the projection areas of the light sources and the cells in the two-dimensional grid. Each circle in FIG. 3B represents a projection area of one light source, a solid point in the circle represents a center of the circle, and the center of the circle is a projection location of a world space location of the light source on the preset plane. L0 to L5 represent five light sources, and a number following L may be referred to as an index of the light source. A number after a colon represents brightness. For example, 100 in L4: 100 represents brightness. For example, the terminal may select all or a part of light sources in the light sources whose projection areas intersect with the cell, to form the target light source cluster corresponding to the cell. The light source cluster is a set formed by light sources, and the target light source cluster is a light source cluster obtained through clustering performed on the plurality of light sources in the virtual scene. The terminal may determine a matching light source cluster having an illumination impact on the pixel point from target light source clusters respectively corresponding to the cells, and determine the target light source corresponding to the pixel point from the matching light source cluster having an illumination impact on the pixel point. The matching light source cluster having an illumination impact on the pixel point may be referred to as a matching light source cluster of the pixel point. The target light source corresponding to the pixel point is the light source whose illumination area includes the world space location of the pixel point.

In some embodiments, for each cell, a unit column of the cell is generated. The unit column of the cell is a column that uses the cell as a cross section, is perpendicular to the preset plane, and has a height greater than a preset height. The terminal may obtain, based on light sources whose illumination areas intersect with the unit column, a target light source cluster corresponding to the cell. The unit column may also be referred to as a light source cluster column. The terminal may select all or a part of light sources in the light sources whose illumination areas intersect with the unit column, to form the target light source cluster corresponding to the cell.

In some embodiments, the terminal may determine a cell to which a projection location of the world space location of the pixel point on the preset plane belongs, to obtain a target cell, and determine a target light source cluster corresponding to the target cell as the matching light source cluster having an illumination impact on the pixel point. The terminal may determine, from the matching light source cluster having an illumination impact on the pixel point, the light source whose illumination area includes the world space location of the pixel point, to obtain the target light source corresponding to the pixel point.

Operation 206: Obtain a second space position of the target light source. In embodiments of the present application, operation 206 can include following operations: Obtain a location of the target light source in the world space, to obtain a world space location of the target light source.

Operation 208: Perform ray tracing based on the position of the target light source and the position of the pixel point, to obtain lighting information of the target light source for the pixel point, the lighting information indicating whether a virtual ray generated by the target light source reaches the position of the pixel point. In embodiments of the present application, operation 208 can include following operations: perform ray tracing based on the world space location of the target light source and the world space location of the pixel point, to obtain light source access information of the target light source for the pixel point, the light source access information (i.e., lighting information) representing whether the target light source illuminates the world space location of the pixel point.

Ray tracing may be implemented based on screen space ray tracing and a screen space shadow algorithm. Screen space ray tracing is a common real-time computer graphics algorithm in which whether a part between two points in space is blocked by a pixel in the screen space in corresponding world space is determined by accessing a scene depth buffer by using a pixel shader program or a compute shader program. The screen space shadow algorithm is a real-time computer graphics algorithm in which screen space ray tracing is performed between a pixel to be drawn currently and a light source, to calculate whether the pixel generates a shadow under the light source.

Light source access information of a light source for the pixel point represents whether the light source illuminates the world space location of the pixel point. The light source access information is one of a first preset value or a second preset value. The first preset value represents that the light source does not illuminate the world space location of the pixel point; and the second preset value represents that the light source illuminates the world space location of the pixel point. The first preset value is different from the second preset value. The first preset value and the second preset value may be represented by different values. For example, the first preset value is 1, and the second preset value is 0. Certainly, the first preset value and the second preset value may alternatively be other values. This is not specifically limited herein.

Specifically, for any light source in the matching light source cluster of the pixel point, in a case that an illumination area of the light source includes the world space location of the pixel point, in other words, in a case that the light source is the target light source corresponding to the pixel point, the terminal may perform ray tracing based on the world space location of the target light source and the world space location of the pixel point, to obtain the light source access information of the target light source for the pixel point.

In some embodiments, for any light source in the matching light source cluster of the pixel point, in a case that an illumination area of the light source does not include the world space location of the pixel point, the terminal uses the first preset value as light source access information of the light source for the pixel point.

In some embodiments, for any light source in the matching light source cluster of the pixel point, in a case that a distance between the target light source and an observation location is greater than a distance threshold, the terminal may obtain light source access information of the light source for the pixel point. The distance threshold may be set as required, and the observation location is a location of a virtual camera for observing the virtual scene currently.

In some embodiments, in a case that light source access information of each light source in the matching light source cluster of the pixel point for the pixel point is obtained, before virtual scene image rendering is performed, the terminal may form cluster access information of the pixel point by using the light source access information of each light source in the matching light source cluster for the pixel point.

Operation 210: Performing virtual scene image rendering on the virtual scene based on the lighting information, to obtain a virtual scene image rendering result; Operation 210: Perform virtual scene image rendering on the virtual scene based on the light source access information, to obtain a virtual scene image rendering result.

Specifically, the terminal may sequentially determine the target light source corresponding to the pixel point from the plurality of light sources in the virtual scene, and determine a different target light source each time. Moreover, in a case of obtaining the light source access information of the target light source for the pixel point, the terminal performs virtual scene image rendering on the virtual scene based on the light source access information until the plurality of light sources are traversed, to obtain the final virtual scene image rendering result. Alternatively, the terminal may first determine cluster access information of each pixel point before rendering. When virtual scene image rendering is performed, for each pixel point in the screen space, in a case that the matching light source cluster of the pixel point includes a light source participating in virtual scene image rendering, light source access information of the light source participating in virtual scene image rendering for the pixel point is obtained from the cluster access information of the pixel point, and virtual scene image rendering is performed based on the light source access information of the light source participating in virtual scene image rendering for the pixel point, to obtain the virtual scene image rendering result. There may be one or more light sources participating in virtual scene image rendering. For each light source participating in virtual scene image rendering, virtual scene image rendering may be performed in the manner provided in this embodiment. The light source participating in virtual scene image rendering is a light source that is actually to be drawn in a delay pipeline of the GPU.

In some embodiments, for each pixel point in the screen space, the terminal may generate a corresponding bit string for the pixel point. The bit string is a character string including only at least one of 0 or 1. A length of the bit string is a fixed value, and the fixed value is greater than or equal to a maximum length of a light source list configured for storing a light source cluster. An actual form of the bit string may be a 32-bit integer or the like. The terminal may store the cluster access information of the pixel point in a form of a bit string. For example, different bits in the bit string represent different light source access information in the cluster access information. Before determining the light source access information, the terminal may generate the bit string of the pixel point and initialize a character of each bit in the bit string to the second preset value, for example, 0. In a case that light source access information of a light source for the pixel point is determined as the first preset value, a bit corresponding to the light source in the bit string is updated to the first preset value, for example, 1. In a case that light source access information of a light source for the pixel point is determined as the second preset value, the bit string remains unchanged. The terminal may create a buffer in the GPU, where the buffer may be referred to as a screen pixel shadow mask buffer, and the terminal stores a bit string of each pixel point into the buffer. When virtual scene image rendering is performed, the terminal may read light source access information of a light source for a pixel point from the buffer.

In the foregoing virtual scene image rendering method, the location of each pixel point in the screen space in the world space in which the virtual scene is located is obtained, to obtain the world space location of each pixel point. For each pixel point in the screen space, from the plurality of light sources in the virtual scene, the light source whose illumination area includes the world space location of the pixel point is determined, to obtain the target light source corresponding to the pixel point. Ray tracing is performed based on a distance between the target light source and the pixel point in the world space, to obtain the light source access information of the target light source for the pixel point, the light source access information representing whether the target light source illuminates the world space location of the pixel point. Virtual scene image rendering is performed on the virtual scene based on each piece of light source access information. Because virtual scene image rendering is performed based on the light source access information determined through ray tracing, for a case in which there are a large number of light sources in the virtual scene, virtual scene image rendering may be quickly implemented, so that virtual scene image rendering efficiency is improved, calculation complexity is low, hardware computer resources configured for supporting virtual scene image rendering are reduced, a waste of the hardware computer resources is reduced, and utilization of the hardware computer resources is improved.

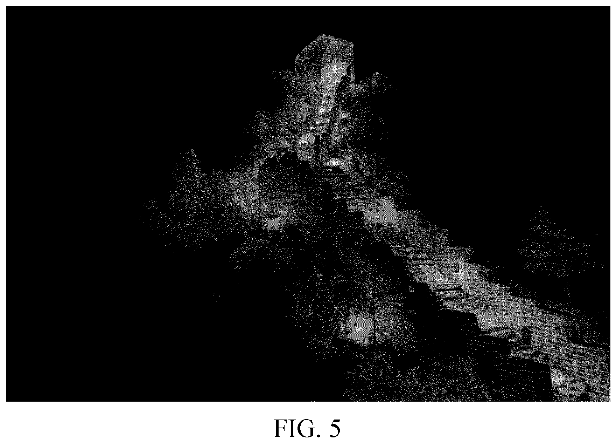

The virtual scene image rendering method provided in this application may be applied to real-time rendering, to add a stronger sense of layering and realism to a rendered picture by using a shadow. FIG. 4 shows a real-time rendering picture obtained when virtual scene image rendering is not performed. FIG. 5 shows a real-time rendering picture obtained when virtual scene image rendering is performed. Apparently, compared with FIG. 4, the real-time rendering picture in FIG. 5 has a stronger sense of layering and realism. Real-time rendering with more light sources needs to cooperate with real-time virtual scene image rendering with more light sources to implement real-time rendering for a sense of realism with more light sources. According to the virtual scene image rendering method provided in this application, rendering performance with more light sources may be irrelevant to a scene scale and a quantity of light sources, so that rendering efficiency with more light sources in a scene with more light sources is improved, thereby enabling virtual scene image rendering with more light sources to achieve real-time performance.

In some embodiments, the performing ray tracing based on the world space location of the target light source and the world space location of the pixel point, to obtain light source access information of the target light source for the pixel point includes: determining a ray tracing start location and a ray tracing end location based on the world space location of the target light source and the world space location of the pixel point; determining a ray tracing step quantity based on the ray tracing start location and the ray tracing end location; and performing ray tracing based on the ray tracing step quantity, to obtain the light source access information of the target light source for the pixel point.

The world space location of the target light source is a location of the target light source in the world space. The ray tracing start location is the world space location of the pixel point.

Specifically, the terminal may determine the world space location of the pixel point as the ray tracing start location. The terminal may determine a direction pointing from the world space location of the pixel point to the world space location of the target light source, to obtain a ray tracing direction, and determine a location at which a distance between the location and the world space location of the pixel point in the ray tracing direction is equal to a preset tracing distance as the ray tracing end location. The preset tracing distance may be set as required. For example, the preset tracing distance may be determined based on a length of a shadow, and the preset tracing distance is greater than or equal to the length of the shadow.

In some embodiments, the terminal may determine a tracing step quantity factor based on the ray tracing start location and the ray tracing end location, and determine the ray tracing step quantity based on the tracing step quantity factor and a tracing step quantity threshold. In a case that a depth difference of any sampling location is less than or equal to a depth difference threshold, the light source access information of the target light source for the pixel point is determined as the first preset value; or in a case that a depth difference of each sampling location is greater than a depth difference threshold, the light source access information of the target light source for the pixel point is determined as the second preset value. The depth difference threshold may be preset, or the depth difference threshold may be determined based on a depth value of the ray tracing start location and a depth value of the ray tracing end location.

In the embodiments, the ray tracing step quantity is determined based on the ray tracing start location and the ray tracing end location, so that the ray tracing step quantity can be properly limited, ray tracing efficiency is improved, and the hardware computer resources configured for supporting virtual scene image rendering are reduced.

In some embodiments, the determining a ray tracing start location and a ray tracing end location based on the world space location of the target light source and the world space location of the pixel point includes: determining a direction pointing from the world space location of the pixel point to the world space location of the target light source, to obtain a ray tracing direction; determining the world space location of the pixel point as the ray tracing start location; and determining the ray tracing end location based on the ray tracing direction and a preset tracing distance.

The preset tracing distance may be set as required. For example, the preset tracing distance may be determined based on a length of a shadow, and the preset tracing distance is greater than or equal to the length of the shadow. The ray tracing direction is the direction pointing from the world space location of the pixel point to the world space location of the target light source, and the ray tracing direction may be represented by a direction vector. The direction vector points from the world space location of the pixel point to the world space location of the target light source, and is a unit vector.

Specifically, the terminal may multiply the preset tracing distance by the direction vector, add a multiplication result and the world space location of the pixel point, and use an addition result as the end location. For example, if the preset tracing distance is L, the direction vector is (x1, y1, z1), and the world space location of the pixel point is (x2, y2, z2), the end location is equal to (x2, y2, z2)+L*(x1, y1, z1).

In the embodiments, the ray tracing end location is determined based on the ray tracing direction and the preset tracing distance, so that a distance of ray tracing can be limited, ray tracing efficiency is improved, and the hardware computer resources configured for supporting virtual scene image rendering are reduced.

In some embodiments, the determining a ray tracing step quantity based on the ray tracing start location and the ray tracing end location includes: converting the ray tracing start location to preset two-dimensional space, to obtain a converted start location, the preset two-dimensional space being any one of texture space or the screen space; converting the ray tracing end location to the preset two-dimensional space, to obtain a converted end location; determining a distance between the converted start location and the converted end location; determining a tracing step quantity factor based on the distance between the converted start location and the converted end location; and determining the ray tracing step quantity based on the tracing step quantity factor and a tracing step quantity threshold.

The preset two-dimensional space is any one of the texture space (namely, UV space) or the screen space. The texture space is a unit square area, and texture coordinates are represented by (u, v), where 0<=u<=1, and 0<=v<=1. The tracing step quantity threshold may be preset as required. The tracing step quantity factor reflects a screen area occupied on the screen space by a line segment from the ray tracing start location to the ray tracing end location. A larger tracing step quantity factor indicates a larger screen area occupied on the screen space.

Specifically, in a case that the preset two-dimensional space is the texture space, the terminal may determine a corresponding location of the ray tracing start location after the ray tracing start location is converted to the texture space, and use the determined location as the converted start location; and may determine a corresponding location of the ray tracing end location after the ray tracing end location is converted to the texture space, and use the determined location as the converted end location. Similarly, in a case that the preset two-dimensional space is the screen space, the terminal may determine a corresponding location of the ray tracing start location after the ray tracing start location is converted to the screen space, and use the determined location as the converted start location; and may determine a corresponding location of the ray tracing end location after the ray tracing end location is converted to the screen space, and use the determined location as the converted end location.

In some embodiments, a distance between the converted start location and the converted end location is in a positive correlation with the tracing step quantity factor. The ray tracing step quantity is in a positive correlation with the tracing step quantity factor and the tracing step quantity threshold. For example, the terminal may calculate the distance between the converted start location and the converted end location, and determine the calculated distance as the tracing step quantity factor.

In some embodiments, the tracing step quantity threshold may include a minimum tracing step quantity and a maximum tracing step quantity, and the minimum tracing step quantity and the maximum tracing step quantity may be preset as required. The terminal may multiply the tracing step quantity factor by the maximum tracing step quantity, and use a multiplication result as a candidate tracing step quantity. In a case that the candidate tracing step quantity is less than the minimum tracing step quantity, the minimum tracing step quantity is used as the ray tracing step quantity. In a case that the candidate tracing step quantity is greater than the maximum tracing step quantity, the maximum tracing step quantity is used as the ray tracing step quantity. In a case that the candidate tracing step quantity is greater than or equal to the minimum tracing step quantity and the candidate tracing step quantity is less than or equal to the maximum tracing step quantity, the candidate tracing step quantity is used as the ray tracing step quantity. In the embodiments, because the tracing step quantity threshold includes the preset minimum tracing step quantity and the preset maximum tracing step quantity, the ray tracing step quantity can be quickly and accurately determined based on the minimum tracing step quantity and the maximum tracing step quantity, thereby improving utilization of the hardware computer resources configured for supporting virtual scene image rendering.

In the embodiments, the tracing step quantity factor reflects the screen area occupied on the screen space by the line segment from the ray tracing start location to the ray tracing end location. A larger occupied screen area indicates a shorter distance of the camera from the pixel point and the light source; and a smaller occupied screen area indicates a longer distance of the camera from the pixel point and the light source. Therefore, the ray tracing step quantity is in a positive correlation with the tracing step quantity factor. In this way, a shorter distance of the pixel point and the light source from the camera indicates a larger ray tracing step quantity; and a longer distance of the pixel point and the light source from the camera indicates a smaller ray tracing step quantity, so that ray tracing is more proper, ray tracing efficiency is improved, the hardware computer resources configured for supporting virtual scene image rendering are reduced, and utilization of the hardware computer resources is improved.

In some embodiments, the performing ray tracing based on the ray tracing step quantity, to obtain the light source access information of the target light source for the pixel point includes: determining a ray tracing step length based on the preset tracing distance and the ray tracing step quantity; performing sampling from the world space location of the pixel point at intervals of the ray tracing step length in the ray tracing direction, to obtain a plurality of sampling locations; obtaining a depth value of each sampling location; obtaining a depth value of a screen space location corresponding to each sampling location; for each sampling location, determining a difference between the depth value of the sampling location and the depth value of the corresponding screen space location, to obtain a depth difference of the sampling location; and obtaining the light source access information of the target light source for the pixel point based on a depth difference of each sampling location.

The plurality of sampling locations are a ray tracing step quantity of sampling locations. For example, if the ray tracing step quantity is 6, the plurality of sampling locations are six sampling locations.

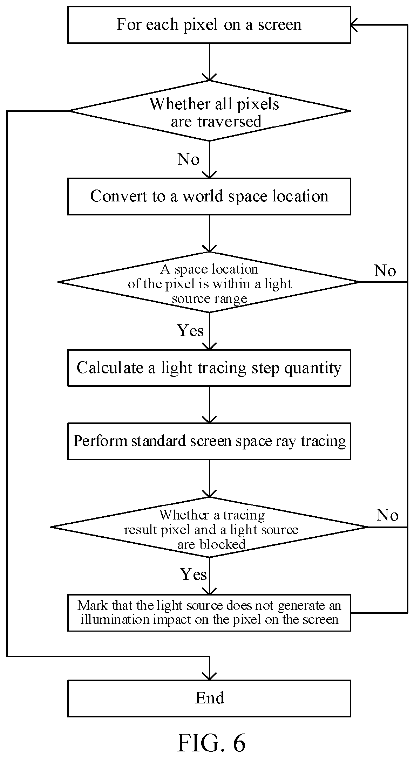

Specifically, the terminal may calculate a ratio of the preset tracing distance to the ray tracing step quantity, and determine the calculated ratio as the ray tracing step length. The screen space location is the location of the pixel point in the screen space, and the depth value of the screen space location is a depth value of the pixel point. The terminal may store a depth value of each pixel point in the screen space. The terminal may determine the plurality of sampling locations from the world space location of the pixel point in the ray tracing direction. A spacing length of two adjacent sampling locations in the ray tracing direction is the ray tracing step length, and a quantity of the sampling locations is the ray tracing step quantity. The terminal may determine a depth value of a sampling location to obtain a first depth value, calculate a pixel point corresponding to the sampling location in the screen space, obtain a depth value of the corresponding pixel point to obtain a second depth value, and calculate a difference between the first depth value and the second depth value to obtain a depth difference of the sampling location. The depth value is configured for reflecting a distance between a world space location and an observation location, and the depth value of the pixel point is configured for reflecting a distance between a location of the pixel point in the world space and the observation location. A larger depth value indicates a farther distance between the location of the pixel point in the world space and the observation location. In some embodiments, in a case that a depth difference of any sampling location is less than or equal to the depth difference threshold, the terminal may determine the light source access information of the target light source for the pixel point as the first preset value; or in a case that the depth difference of each sampling location is greater than the depth difference threshold, the terminal may determine the light source access information of the target light source for the pixel point as the second preset value. The depth difference threshold may be set as required, or the depth difference threshold may be determined based on the depth value of the ray tracing start location and the depth value of the ray tracing end location. FIG. 6 is a schematic flowchart of determining the light source access information. A "light tracing step quantity" in FIG. 6 is the ray tracing step quantity, and "whether a tracing result pixel and a light source are blocked" is configured for determining whether the light source is blocked. In a case that a depth difference of any sampling location is less than or equal to the depth difference threshold, it is determined that the light source is blocked. In a case that the depth difference of each sampling location is greater than the depth difference threshold, it is determined that the light source is not blocked.

In the embodiments, the light source access information is determined based on the depth value, thereby improving accuracy and efficiency of determining the light source access information, reducing the hardware computer resources configured for supporting virtual scene image rendering, and improving utilization of the hardware computer resources.

In some embodiments, the obtaining the light source access information of the target light source for the pixel point based on a depth difference of each sampling location includes: determining a depth difference threshold based on a depth value of the ray tracing start location and a depth value of the ray tracing end location; and in a case that a depth difference of any sampling location is less than or equal to the depth difference threshold, determining the light source access information of the target light source for the pixel point as a first preset value, the first preset value representing that the target light source does not illuminate the world space location of the pixel point; or in a case that the depth difference of each sampling location is greater than the depth difference threshold, determining the light source access information of the target light source for the pixel point as a second preset value, the second preset value representing that the target light source illuminates the world space location of the pixel point.

Specifically, the terminal may determine the depth value of the ray tracing start location to obtain a starting depth value, determine the depth value of the ray tracing end location to obtain an ending depth value, determine a difference between the starting depth value and the ending depth value to obtain a total depth difference, and determine the depth difference threshold based on the total depth difference and the ray tracing step quantity. For example, the terminal may calculate a ratio of the total depth difference to the ray tracing step quantity, and determine the calculated ratio as the depth difference threshold. The depth difference threshold may also be referred to as a step depth.

In the embodiments, in a case that a depth difference of any sampling location is less than or equal to the depth difference threshold, the light source access information of the target light source for the pixel point is determined as the first preset value; or in a case that the depth difference of each sampling location is greater than the depth difference threshold, the light source access information of the target light source for the pixel point is determined as the second preset value. This improves accuracy of the light source access information, reduces the hardware computer resources configured for supporting virtual scene image rendering, and improves utilization of the hardware computer resources.

In some embodiments, the determining a depth difference threshold based on a depth value of the ray tracing start location and a depth value of the ray tracing end location includes: using the depth value of the ray tracing start location as a starting depth value, and using the depth value of the ray tracing end location as an ending depth value; determining a difference between the starting depth value and the ending depth value, to obtain a total depth difference; and determining the depth difference threshold based on the total depth difference and the ray tracing step quantity.

Specifically, the depth difference threshold is in a positive correlation with the total depth difference, and the depth difference threshold is in a negative correlation with the ray tracing step quantity. For example, the terminal may calculate a ratio of the total depth difference to the ray tracing step quantity, and determine the calculated ratio as the depth difference threshold.

In the embodiments, the depth difference threshold is determined based on the total depth difference and the ray tracing step quantity. This improves accuracy of the depth difference threshold.

In some embodiments, the determining, from a plurality of light sources in the virtual scene, a light source whose illumination area includes the world space location of the pixel point, to obtain a target light source corresponding to the pixel point includes: distributing a two-dimensional grid on a preset plane in the world space, the two-dimensional grid including a plurality of cells; obtaining projection areas of respective illumination areas of the plurality of light sources in the virtual scene on the preset plane; for each cell, obtaining a light source whose projection area has an intersection relationship with the cell from the plurality of light sources, to obtain a target light source cluster corresponding to the cell; determining a matching light source cluster having an illumination impact on the pixel point from target light source clusters respectively corresponding to the cells; and determining the target light source corresponding to the pixel point from the matching light source cluster having an illumination impact on the pixel point.

Specifically, a quantity of light sources included in the target light source cluster is less than or equal to a preset quantity. The terminal may select light sources of a quantity less than or equal to the preset quantity from the light sources whose projection areas intersect with the cell, to form the target light source cluster corresponding to the cell. Alternatively, the terminal may select light sources of a quantity less than or equal to the preset quantity from the light sources whose illumination areas intersect with the unit column, to form the target light source cluster corresponding to the cell.

In some embodiments, the terminal may initialize a light source cluster of each cell. An initialized light source cluster includes no light source, and may accommodate the preset quantity of light sources at most. For example, an empty list having a fixed length may be initialized to be used as the initialized light source cluster, and the empty list having a fixed length may store at most the preset quantity of light sources. Storing a light source in the light source cluster means storing an identifier of the light source rather than storing the light source itself. A current light source cluster is initially the initialized light source cluster, and when the plurality of light sources are traversed, a light source may be added to the current light source cluster. The terminal may sequentially determine a candidate light source from the plurality of light sources, and determine a cell having an intersection relationship with the candidate light source on the preset plane from the cells of the two-dimensional grid. In a case that a quantity of light sources included in a current light source cluster of the determined cell is less than the preset quantity, the candidate light source is added to the current light source cluster of the determined cell, and the terminal returns to the operation of sequentially determining a candidate light source from the plurality of light sources until the plurality of light sources are traversed. After the plurality of light sources are traversed, the terminal may determine a current light source cluster of each cell in the two-dimensional grid as a target light source cluster of the cell. The candidate light source is any light source in the plurality of light sources. In a process in which the plurality of light sources are traversed, a different light source may be used as the candidate light source each time. The cell having an intersection relationship with the candidate light source on the preset plane is a cell that intersects with a projection area of an illumination area of the candidate light source on the preset plane. In the process in which the plurality of light sources are traversed, the current light source cluster of the cell may constantly change. Before the plurality of light sources start to be traversed, the current light source cluster of the cell may not include any light source, in other words, the current light source cluster is initialized to be a light source cluster that does not include any light source. In the process in which the plurality of light sources are traversed, a light source is added to the current light source cluster.

In the embodiments, the light sources are clustered and virtual scene image rendering is performed based on the matching light source cluster of the pixel point. Therefore, for a case in which there are a large number of light sources in the virtual scene, virtual scene image rendering may be quickly implemented, so that virtual scene image rendering efficiency is improved, the hardware computer resources configured for supporting virtual scene image rendering are reduced, and utilization of the hardware computer resources is improved.

In some embodiments, a quantity of light sources in each target light source cluster is less than or equal to a preset quantity.

The preset quantity may be set as required, for example, may be 20 or 50. In a case that a projection area of an illumination area of a light source on the preset plane intersects with a cell, it is considered that the light source has an intersection relationship with the cell.

Specifically, for each cell, the terminal may determine an intersected light source of the cell from the plurality of light sources. The intersected light source of the cell is a light source whose illumination area has a projection area having an intersection relationship with the cell on the preset plane. A quantity of intersected light sources of the cell may be one or more, and the "more" means at least two. In a case that the quantity of the intersected light sources of the cell is less than or equal to the preset quantity, the terminal may form a target light source cluster corresponding to the cell by using the intersected light sources of the cell.

In some embodiments, in a case that the quantity of the intersected light sources of the cell is greater than the preset quantity, the terminal may calculate an impact degree representation value of each intersected light source for the cell, select the preset quantity of intersected light sources from the intersected light sources of the cell in a descending order of impact degree representation values, and form the target light source cluster corresponding to the cell by using the selected intersected light sources.

In some embodiments, the impact degree representation value of the light source for the cell may be determined based on at least one of a quantized distance value or a quantized attribute value. The impact degree representation value is in a negative correlation with the quantized distance value. The quantized distance value is configured for representing a distance between the light source and the cell. The distance between the light source and the cell may be a distance between a world space location of the light source and a central location of the cell, or may be a distance between a projection location of the light source and a central location of the cell. The projection location of the light source is a location of a projection of the world space location of the light source on the preset plane. The quantized attribute value is determined based on an attribute of the light source, where the attribute of the light source includes, but is not limited to at least one of brightness of the light source or illumination intensity of the light source. The brightness is obtained through color calculation of the light source. The quantized attribute value is in a positive correlation with both the brightness of the light source and the illumination intensity of the light source. The quantized attribute value may further be related with an attenuation speed of the light source. A faster attenuation speed of the light source indicates a smaller quantized attribute value, and a slower attenuation speed of the light source indicates a larger quantized attribute value. The impact degree representation value is in a positive correlation with the quantized attribute value. For example, the terminal may calculate a ratio of the quantized attribute value to the quantized distance value, and determine the ratio as the impact degree representation value of the intersected light source for the cell.

In the embodiments, because the quantity of light sources in the target light source cluster is less than or equal to the preset quantity, an impact of the quantity of light sources on rendering performance is relieved. In a case in which there are a large number of light sources in the virtual scene, rendering performance and efficiency may be improved, the hardware computer resources configured for supporting virtual scene image rendering are reduced, and utilization of the hardware computer resources is improved.

In some embodiments, the obtaining a light source whose projection area has an intersection relationship with the cell from the plurality of light sources, to obtain a target light source cluster corresponding to the cell includes: initializing a light source cluster of the cell; determining the light source whose projection area has an intersection relationship with the cell from the plurality of light sources, to obtain an intersected light source of the cell; adding the intersected light source into the light source cluster of the cell in a case that a quantity of light sources included in the light source cluster of the cell does not reach the preset quantity; in a case that the quantity of light sources included in the light source cluster of the cell reaches the preset quantity, determining an impact degree representation value of the intersected light source of the cell for the cell, searching the light source cluster of the cell for a to-be-replaced light source, and replacing the to-be-replaced light source in the light source cluster of the cell with the intersected light source, the to-be-replaced light source being a light source whose impact degree representation value for the cell is less than the impact degree representation value of the intersected light source for the cell; returning to the operation of determining the light source whose projection area has an intersection relationship with the cell from the plurality of light sources, to obtain an intersected light source of the cell until the plurality of light sources are traversed; and in a case that the plurality of light sources are traversed, determining the light source cluster of the cell as the target light source cluster corresponding to the cell.

Specifically, the terminal may sequentially determine the intersected light source of the cell from the plurality of light sources, the intersected light source of the cell being the light source whose illumination area has a projection area having an intersection relationship with the cell on the preset plane; add the intersected light source into a current light source cluster of the cell in a case that a quantity of light sources included in the current light source cluster of the cell is less than the preset quantity; return to the operation of sequentially determining the intersected light source of the cell from the plurality of light sources until the plurality of light sources are traversed; and in a case that the plurality of light sources are traversed, determine the current light source cluster of the cell as the target light source cluster of the cell.

In some embodiments, in a case that the quantity of light sources included in the current light source cluster of the cell reaches the preset quantity, the terminal may determine an impact degree representation value of the intersected light source of the cell for the cell, and search the current light source cluster of the cell for a first to-be-replaced light source, an impact degree representation value of the first to-be-replaced light source for the cell being less than the impact degree representation value of the intersected light source for the cell. For example, the terminal may determine a minimum impact degree representation value from impact degree representation values corresponding to the current light source cluster of the cell. The impact degree representation values are respective impact degree representation values of the light sources in the current light source cluster of the cell for the cell. The terminal may compare the impact degree representation value of the intersected light source for the cell with the minimum impact degree representation value, and in a case that the impact degree representation value of the intersected light source for the cell is greater than the minimum impact degree representation value, determine a light source corresponding to the minimum impact degree representation value as the found first to-be-replaced light source. In this way, a light source having a large impact degree representation value is reserved in the target light source cluster of the cell, facilitating accurate rendering, and improving a rendering effect.

In some embodiments, the terminal may remove the found first to-be-replaced light source from the current light source cluster of the cell, add the intersected light source to the current light source cluster of the cell, return to the operation of sequentially determining the intersected light source of the cell from the plurality of light sources until the plurality of light sources are traversed, and in a case that the plurality of light sources are traversed, determine the current light source cluster of the cell as the target light source cluster of the cell. In a case that the impact degree representation value of the intersected light source for the cell is less than or equal to the minimum impact degree representation value, the terminal determines that the first to-be-replaced light source is not found, and returns to the operation of sequentially determining the intersected light source of the cell from the plurality of light sources.

In some embodiments, the terminal may sequentially determine a candidate light source from the plurality of light sources, and determine a cell having an intersection relationship with the candidate light source on the preset plane from the cells of the two-dimensional grid. In a case that a quantity of light sources included in a current light source cluster of the determined cell is less than the preset quantity, the candidate light source is added to the current light source cluster of the determined cell. In a case that the quantity of light sources included in the current light source cluster of the determined cell reaches the preset quantity, the terminal determines an impact degree representation value of the candidate light source for the determined cell; searches the current light source cluster of the determined cell for a second to-be-replaced light source, an impact degree representation value of the second to-be-replaced light source for the determined cell being less than the impact degree representation value of the candidate light source for the determined cell; removes the found second to-be-replaced light source from the current light source cluster of the determined cell, and adds the candidate light source to the current light source cluster of the determined cell; and returns to the operation of sequentially determining a candidate light source from the plurality of light sources until the plurality of light sources are traversed. After the plurality of light sources are traversed, the terminal may determine a current light source cluster of each cell in the two-dimensional grid as a target light source cluster of the cell.

Specifically, the terminal may determine a minimum impact degree representation value from impact degree representation values corresponding to the current light source cluster of the determined cell. The impact degree representation values are respective impact degree representation values of the light sources in the current light source cluster of the determined cell for the determined cell. The terminal may compare the impact degree representation value of the candidate light source for the determined cell with the minimum impact degree representation value, and in a case that the impact degree representation value of the candidate light source for the determined cell is greater than the minimum impact degree representation value, determine a light source corresponding to the minimum impact degree representation value as the found second to-be-replaced light source. In a case that the impact degree representation value of the candidate light source for the determined cell is less than or equal to the minimum impact degree representation value, the terminal determines that the second to-be-replaced light source is not found. Because the impact degree representation value of the second to-be-replaced light source for the determined cell is less than the impact degree representation value of the candidate light source for the determined cell, the found second to-be-replaced light source is removed from the current light source cluster of the determined cell, and the candidate light source is added to the current light source cluster of the determined cell, so that the light sources in the current light source cluster may be updated in a direction in increasing of the impact degree representation value, so that a light source having a large impact degree representation value is reserved in the target light source cluster of the cell, facilitating accurate rendering, and improving a rendering effect.

In some embodiments, a clustering manner includes at least one of a first clustering manner or a second clustering manner. The first clustering manner is different from the second clustering manner. The first clustering manner and the second clustering manner are respectively applicable to a case in which there are few light sources or a parallel computing capability of the GPU is strong, and a case in which there are excessively a large number of light sources or a parallel computing capability of the GPU is slightly weak. The terminal may determine a selected clustering manner before clustering, the selected clustering manner may be automatically selected by the terminal based on the quantity of light sources or the parallel computing capability of the GPU, or may be manually selected.

In a case that the selected clustering manner is the first clustering manner, for each cell in the two-dimensional grid, the terminal may sequentially determine an intersected light source of the cell from the plurality of light sources, the intersected light source of the cell being a light source whose illumination area has a projection area having an intersection relationship with the cell on the preset plane. In a case that a quantity of light sources included in a current light source cluster of the cell is less than the preset quantity, the intersected light source is added to the current light source cluster of the cell, and the terminal returns to the operation of sequentially determining an intersected light source of the cell from the plurality of light sources until the plurality of light sources are traversed. After the plurality of light sources are traversed, the current light source cluster of the cell is determined as a target light source cluster of the cell.

In a case that the selected clustering manner is the second clustering manner, the terminal may sequentially determine a candidate light source from the plurality of light sources, and determine a cell having an intersection relationship with the candidate light source on the preset plane from the cells of the two-dimensional grid. In a case that a quantity of light sources included in a current light source cluster of the determined cell is less than the preset quantity, the candidate light source is added to the current light source cluster of the determined cell, and the terminal returns to the operation of sequentially determining a candidate light source from the plurality of light sources until the plurality of light sources are traversed. After the plurality of light sources are traversed, a current light source cluster of each cell in the two-dimensional grid is determined as a target light source cluster of the cell.

In the embodiments, a target light source cluster of a cell is quickly determined by traversing light sources, thereby improving clustering efficiency, reducing the hardware computer resources configured for supporting virtual scene image rendering, and improving utilization of the hardware computer resources.

In some embodiments, the determining a matching light source cluster having an illumination impact on the pixel point from target light source clusters respectively corresponding to the cells includes: obtaining a projection location of the world space location of the pixel point on the preset plane; determining a cell to which the projection location belongs, to obtain a target cell; and determining a target light source cluster corresponding to the target cell as the matching light source cluster having an illumination impact on the pixel point.

An area occupied by the target cell on the preset plane includes the projection location of the world space location of the pixel point on the preset plane.

In the embodiments, the matching light source cluster having an illumination impact on the pixel point is accurately and efficiently determined through the projection location, thereby reducing the hardware computer resources configured for supporting virtual scene image rendering, and improving utilization of the hardware computer resources.

In some embodiments, the method further includes: forming cluster access information of the pixel point by using light source access information of each light source in the matching light source cluster of the pixel point for the pixel point; determining each light source participating in virtual scene image rendering during rendering; for each pixel point in the screen space, in a case that the matching light source cluster of the pixel point includes at least one light source participating in virtual scene image rendering, obtaining light source access information of the at least one light source participating in virtual scene image rendering for the pixel point from the cluster access information of the pixel point; and performing virtual scene image rendering based on the light source access information of the at least one light source participating in virtual scene image rendering for the pixel point, to obtain the virtual scene image rendering result.

The cluster access information of the pixel point includes the light source access information of each light source in the matching light source cluster of the pixel point for the pixel point. The cluster access information of the pixel point is generated before virtual scene image rendering is performed. There may be one or more light sources participating in virtual scene image rendering. For each light source participating in virtual scene image rendering, virtual scene image rendering may be performed in the manner provided in this embodiment. The light source participating in virtual scene image rendering is a light source that is actually to be drawn in a delay pipeline of the GPU.

Specifically, before virtual scene image rendering is performed, for each pixel point, the terminal may form the cluster access information of the pixel point by using the light source access information of each light source in the matching light source cluster of the pixel point for the pixel point. When virtual scene image rendering is performed, the light source access information of the light source participating in virtual scene image rendering for the pixel point is obtained from the cluster access information of the pixel point, and virtual scene image rendering is performed based on the light source access information of the light source participating in virtual scene image rendering for the pixel point, to obtain the virtual scene image rendering result.

In some embodiments, in a case that the light source access information of the light source participating in virtual scene image rendering for the pixel point is the first preset value, it is determined that the pixel point has a shadow under the light source participating in virtual scene image rendering. In a case that the light source access information of the light source participating in virtual scene image rendering for the pixel point is the second preset value, it is determined that the pixel point has no shadow under the light source participating in virtual scene image rendering.

In the embodiments, the light source access information of the light source participating in virtual scene image rendering for the pixel point is obtained from the cluster access information of the pixel point, so that the light source access information can be quickly obtained, thereby improving clustering efficiency, reducing the hardware computer resources configured for supporting virtual scene image rendering, and improving utilization of the hardware computer resources.

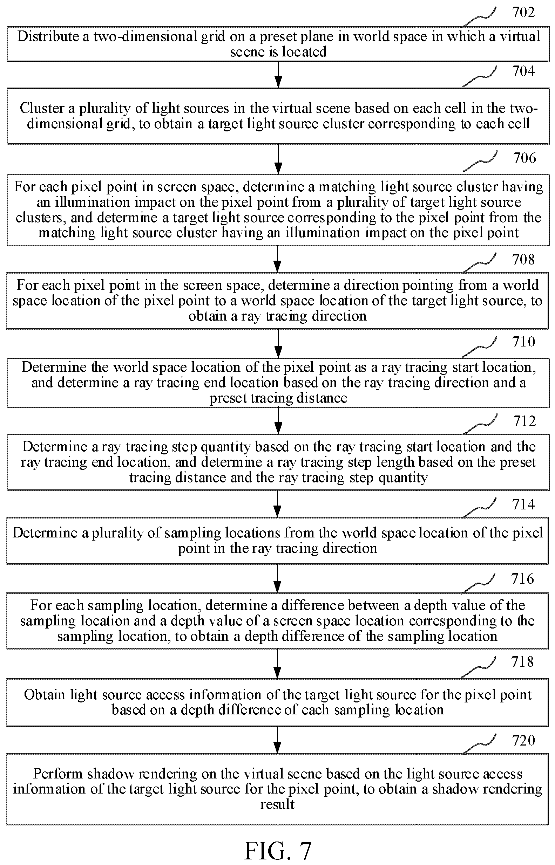

In some embodiments, as shown in FIG. 7, a virtual scene image rendering method is provided. The method may be performed by a terminal, or may be jointly performed by a terminal and a server. An example in which the method is applied to a terminal is used for description, and the following operations are included.

Operation 702: Distribute a two-dimensional grid on a preset plane in world space in which a virtual scene is located.

Operation 704: Cluster a plurality of light sources in the virtual scene based on each cell in the two-dimensional grid, to obtain a target light source cluster corresponding to each cell.

A projection area of an illumination area of a light source in the target light source cluster on the preset plane has an intersection relationship with a corresponding cell.

Operation 706: For each pixel point in screen space, determine a matching light source cluster having an illumination impact on the pixel point from a plurality of target light source clusters, and determine a target light source corresponding to the pixel point from the matching light source cluster having an illumination impact on the pixel point.

Operation 708: For each pixel point in the screen space, determine a direction pointing from a world space location of the pixel point to a world space location of the target light source, to obtain a ray tracing direction.

Light source access information represents whether the target light source illuminates the world space location of the pixel point.

Operation 710: Determine the world space location of the pixel point as a ray tracing start location, and determine a ray tracing end location based on the ray tracing direction and a preset tracing distance.

Operation 712: Determine a ray tracing step quantity based on the ray tracing start location and the ray tracing end location, and determine a ray tracing step length based on the preset tracing distance and the ray tracing step quantity.

The preset tracing distance is a distance between the ray tracing start location and the ray tracing end location.

Operation 714: Determine a plurality of sampling locations from the world space location of the pixel point in the ray tracing direction.

A spacing length of two adjacent sampling locations in the ray tracing direction is the ray tracing step length, and a quantity of the sampling locations is the ray tracing step quantity.

Operation 716: For each sampling location, determine a difference between a depth value of the sampling location and a depth value of a screen space location corresponding to the sampling location, to obtain a depth difference of the sampling location.

Operation 718: Obtain light source access information of the target light source for the pixel point based on a depth difference of each sampling location.

Operation 720: Perform virtual scene image rendering on the virtual scene based on the light source access information of the target light source for the pixel point, to obtain a virtual scene image rendering result. In the embodiments, the light source access information is determined based on ray tracing and the light sources in the virtual scene are clustered. For a case in which there are a large number of light sources in the virtual scene, virtual scene image rendering can be quickly implemented, thereby improving virtual scene image rendering efficiency.

The virtual scene image rendering method provided in this application may be applied to any scene that needs virtual scene image rendering, particularly a scene in which a large number of light sources exist, including, but not limited to a scene applied to film and television special effects, a game, vision simulation, a visual design, virtual reality (VR), industrial simulation, digital cultural creation, or the like. Through the virtual scene image rendering method, virtual scene image rendering efficiency may be improved in the scene applied to film and television special effects, a visual design, a game, vision simulation, VR, industrial simulation, digital cultural creation, or the like.

The virtual scene image rendering method provided in this application is applied to digital cultural creation, and simulation may be performed on an object having a cultural representation meaning, and in particular, an object illuminated by a large number of light sources. For example, simulation may be performed on the Great Wall. A large number of lights are generally disposed on the Great Wall, and lights are also generally installed around the Great Wall. Shadows generated by a large number of lights are rendered. This can reflect a real illumination effect of the Great Wall under illumination of a large number of lights. Specifically, for each pixel point in the screen space, a target light source corresponding to the pixel point is determined from a plurality of light sources in a digital Great Wall scene, ray tracing is performed based on a world space location of the target light source and a world space location of the pixel point, to obtain light source access information of the target light source for the pixel point, and virtual scene image rendering is performed on the digital Great Wall scene based on the light source access information, to obtain a virtual scene image rendering result of the digital Great Wall. In this way, by using the virtual scene image rendering method provided in this application, the real illumination effect of the digital Great Wall under illumination of a large number of lights is presented, and efficiency of virtual scene image rendering in the digital Great Wall is improved.

For a game scene, for each pixel point in the screen space, the terminal may determine a target light source corresponding to the pixel point from a plurality of light sources in the game scene. A world space location of the pixel point in world space in which the game scene is located is located in an illumination area of the target light source corresponding to the pixel point. Ray tracing is performed based on a world space location of the target light source and the world space location of the pixel point, to obtain light source access information of the target light source for the pixel point, the light source access information representing whether the target light source illuminates the world space location of the pixel point. Virtual scene image rendering is performed on the game scene based on the light source access information, to obtain a virtual scene image rendering result. In this way, efficiency of virtual scene image rendering in the game scene is improved.

For optimized rendering of a VR scene, for each pixel point in the screen space, the terminal may determine a target light source corresponding to the pixel point from a plurality of light sources in the VR scene. A world space location of the pixel point in world space in which the VR scene is located is located in an illumination area of the target light source corresponding to the pixel point. Ray tracing is performed based on a world space location of the target light source and the world space location of the pixel point, to obtain light source access information of the target light source for the pixel point, the light source access information representing whether the target light source illuminates the world space location of the pixel point. Virtual scene image rendering is performed on the VR scene based on the light source access information, to obtain a virtual scene image rendering result. In this way, efficiency of virtual scene image rendering in the VR scene is improved.

Although the steps in the flowcharts involved in the foregoing embodiments are displayed sequentially according to instructions of arrows, these steps are not necessarily performed sequentially according to a sequence instructed by the arrows. Unless clearly specified in this specification, the steps are performed without any strict sequence limit, and may be performed in other sequences. In addition, at least some steps in the flowcharts involved in the foregoing embodiments may include a plurality of steps or a plurality of stages. The steps or the stages are not necessarily performed at the same moment, but may be performed at different moments. The steps or the stages are not necessarily performed in sequence, but may be performed in turn or alternately with another step or at least some of steps or stages of the another step.

Based on a same invention conception, the embodiments of this application further provide a virtual scene image rendering apparatus configured to implement the foregoing involved virtual scene image rendering method. An implementation solution that is for solving the problem and that is provided by the apparatus is similar to the implementation solution recorded in the foregoing method, so that for a specific limitation on one or more virtual scene image rendering apparatus embodiments provided below, reference may be made to the limitation on the virtual scene image rendering method above, and details are not described herein again.

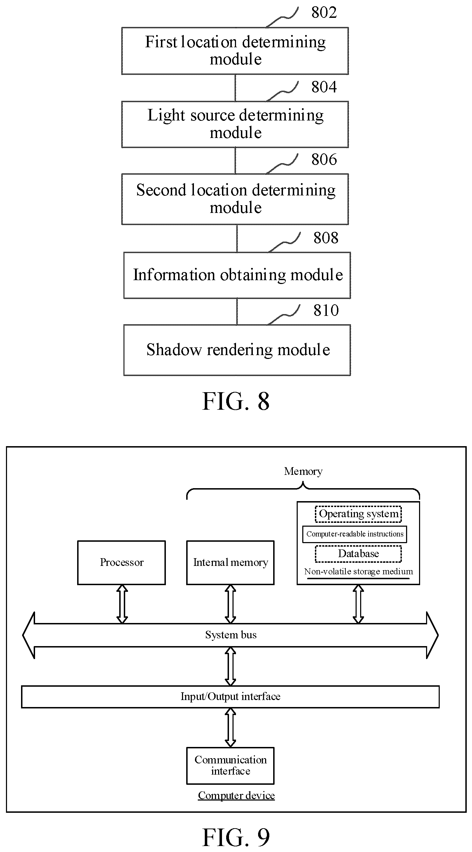

In some embodiments, as shown in FIG. 8, a virtual scene image rendering apparatus is provided, including: a first location determining module 802, a light source determining module 804, a second location determining module 806, an information obtaining module 808, and a virtual scene image rendering module 810.

The first location determining module 802 is configured to obtain a first space position corresponding to a pixel point of a screen displaying a virtual scene.

The light source determining module 804 is configured to determine, for the pixel point and from a plurality of light sources in the virtual scene, a target light source whose illumination area includes the virtual space position of the pixel point.

The second location determining module 806 is configured to obtain a second space position of the target light source.

The information obtaining module 808 is configured to perform ray tracing based on the position of the target light source and the position of the pixel point, to obtain lighting information of the target light source for the pixel point, the lighting information indicating whether a virtual ray generated by the target light source reaches the position of the pixel point.

The virtual scene image rendering module 810 is configured to perform virtual scene image rendering on the virtual scene based on the lighting information, to obtain a virtual scene image rendering result.

In some embodiments, the information obtaining module 808 is further configured to determine a ray tracing start location and a ray tracing end location based on the world space location of the target light source and the world space location of the pixel point; determine a ray tracing step quantity based on the ray tracing start location and the ray tracing end location; and perform ray tracing based on the ray tracing step quantity, to obtain the light source access information of the target light source for the pixel point.

In some embodiments, the information obtaining module 808 is further configured to determine a direction pointing from the world space location of the pixel point to the world space location of the target light source, to obtain a ray tracing direction; determine the world space location of the pixel point as the ray tracing start location; and determine the ray tracing end location based on the ray tracing direction and a preset tracing distance.

In some embodiments, the information obtaining module 808 is further configured to convert the ray tracing start location to preset two-dimensional space, to obtain a converted start location, the preset two-dimensional space being any one of texture space or the screen space; convert the ray tracing end location to the preset two-dimensional space, to obtain a converted end location; determine a distance between the converted start location and the converted end location; determine a tracing step quantity factor based on the distance between the converted start location and the converted end location; and determine the ray tracing step quantity based on the tracing step quantity factor and a tracing step quantity threshold.

In some embodiments, the tracing step quantity threshold includes a preset minimum tracing step quantity and a preset maximum tracing step quantity, and the information obtaining module 808 is further configured to multiply the tracing step quantity factor by the maximum tracing step quantity, and use a multiplication result as a candidate tracing step quantity; and use the minimum tracing step quantity as the ray tracing step quantity in a case that the candidate tracing step quantity is less than the minimum tracing step quantity; or use the maximum tracing step quantity as the ray tracing step quantity in a case that the candidate tracing step quantity is greater than the maximum tracing step quantity.

In some embodiments, the information obtaining module 808 is further configured to determine a ray tracing step length based on the preset tracing distance and the ray tracing step quantity; perform sampling from the world space location of the pixel point at intervals of the ray tracing step length in the ray tracing direction, to obtain a plurality of sampling locations; obtain a depth value of each sampling location; obtain a depth value of a screen space location corresponding to each sampling location; for each sampling location, determine a difference between the depth value of the sampling location and the depth value of the corresponding screen space location, to obtain a depth difference of the sampling location; and obtain the light source access information of the target light source for the pixel point based on a depth difference of each sampling location.

In some embodiments, the information obtaining module 808 is further configured to determine a depth difference threshold based on a depth value of the ray tracing start location and a depth value of the ray tracing end location; and in a case that a depth difference of any sampling location is less than or equal to the depth difference threshold, determine the light source access information of the target light source for the pixel point as a first preset value, the first preset value representing that the target light source does not illuminate the world space location of the pixel point; or in a case that the depth difference of each sampling location is greater than the depth difference threshold, determine the light source access information of the target light source for the pixel point as a second preset value, the second preset value representing that the target light source illuminates the world space location of the pixel point.

In some embodiments, the information obtaining module 808 is further configured to use the depth value of the ray tracing start location as a starting depth value, and use the depth value of the ray tracing end location as an ending depth value; determine a difference between the starting depth value and the ending depth value, to obtain a total depth difference; and determine the depth difference threshold based on the total depth difference and the ray tracing step quantity.

In some embodiments, the light source determining module 804 is further configured to distribute a two-dimensional grid on a preset plane in the world space, the two-dimensional grid including a plurality of cells; obtain projection areas of respective illumination areas of the plurality of light sources in the virtual scene on the preset plane; for each cell, obtain a light source whose projection area has an intersection relationship with the cell from the plurality of light sources, to obtain a target light source cluster corresponding to the cell; determine a matching light source cluster having an illumination impact on the pixel point from target light source clusters respectively corresponding to the cells; and determine the target light source corresponding to the pixel point from the matching light source cluster having an illumination impact on the pixel point.

In some embodiments, the light source determining module 804 is further configured to initialize a light source cluster of the cell; determine the light source whose projection area has an intersection relationship with the cell from the plurality of light sources, to obtain an intersected light source of the cell; add the intersected light source into the light source cluster of the cell in a case that a quantity of light sources included in the light source cluster of the cell does not reach a preset quantity; in a case that the quantity of light sources included in the light source cluster of the cell reaches the preset quantity, determine an impact degree representation value of the intersected light source of the cell for the cell, search the light source cluster of the cell for a to-be-replaced light source, and replace the to-be-replaced light source in the light source cluster of the cell with the intersected light source, the to-be-replaced light source being a light source whose impact degree representation value for the cell is less than the impact degree representation value of the intersected light source for the cell; return to the operation of determining the light source whose projection area has an intersection relationship with the cell from the plurality of light sources, to obtain an intersected light source of the cell until the plurality of light sources are traversed; and in a case that the plurality of light sources are traversed, determine the light source cluster of the cell as the target light source cluster corresponding to the cell.

In some embodiments, the light source determining module 804 is further configured to obtain a projection location of the world space location of the pixel point on the preset plane; determine a cell to which the projection location belongs, to obtain a target cell; and determine a target light source cluster corresponding to the target cell as the matching light source cluster having an illumination impact on the pixel point.

In some embodiments, the apparatus is further configured to: form cluster access information of the pixel point by using light source access information of each light source in the matching light source cluster of the pixel point for the pixel point; determine each light source participating in virtual scene image rendering during rendering; for each pixel point in the screen space, in a case that the matching light source cluster of the pixel point includes at least one light source participating in virtual scene image rendering, obtain light source access information of the at least one light source participating in virtual scene image rendering for the pixel point from the cluster access information of the pixel point; and perform virtual scene image rendering based on the light source access information of the at least one light source participating in virtual scene image rendering for the pixel point, to obtain the virtual scene image rendering result.

The modules in the foregoing virtual scene image rendering apparatus may be implemented entirely or partially by software, hardware, or a combination thereof. The foregoing modules may be built in or independent of a processor of a computer device in a hardware form, or may be stored in a memory of the computer device in a software form, so that the processor invokes and performs an operation corresponding to each of the foregoing modules.

In some embodiments, a computer device is provided. The computer device may be a server, and an internal structure diagram thereof may be shown in FIG. 9. The computer device includes a processor, a memory, an input/output (I/O) interface, and a communication interface. The processor, the memory, and the input/output interface are connected through a system bus, and the communication interface is connected to the system bus through the input/output interface. The processor of the computer device is configured to provide computing and control capabilities. The memory of the computer device includes a non-volatile storage medium and an internal memory. The non-volatile storage medium has an operating system, computer-readable instructions, and a database stored therein. The internal memory provides an environment for running of the operating system and the computer-readable instructions in the non-volatile storage medium. The database of the computer device is configured to store data involved in the virtual scene image rendering method. The input/output interface of the computer device is configured for information exchange between the processor and an external device. The communication interface of the computer device is configured to communicate with an external terminal through a network connection. The computer-readable instructions, when executed by the processor, implement a virtual scene image rendering method.

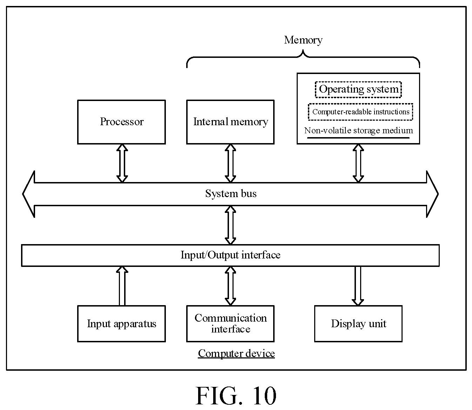

In some embodiments, a computer device is provided. The computer device may be a terminal, and an internal structure diagram thereof may be shown in FIG. 10. The computer device includes a processor, a memory, an input/output interface, a communication interface, a display unit, and an input apparatus. The processor, the memory, and the input/output interface are connected through a system bus, and the communication interface, the display unit, and the input apparatus are connected to the system bus through the input/output interface. The processor of the computer device is configured to provide computing and control capabilities. The memory of the computer device includes a non-volatile storage medium and an internal memory. The non-volatile storage medium stores an operating system and computer-readable instructions. The internal memory provides an environment for running of the operating system and the computer-readable instructions in the non-volatile storage medium. The input/output interface of the computer device is configured for information exchange between the processor and an external device. The communication interface of the computer device is configured to communicate with an external terminal in a wired or wireless manner. The wireless communication may be implemented by Wi-Fi, a mobile cellular network, NFC (Near Field Communication), or another technology. The computer-readable instructions, when executed by the processor, implement a virtual scene image rendering method. The display unit of the computer device is configured to form a visually visible picture, and may be a display screen, a projection apparatus, or a virtual reality imaging apparatus. The display screen of the computer device may be a liquid crystal display screen or an electronic ink display screen. The input apparatus of the computer device may be a touch layer covering the display screen, or may be a key, a trackball, or a touch pad disposed on a housing of the computer device, or may be an external keyboard, a touch pad, a mouse, or the like.

A person skilled in the art may understand that, the structure shown in FIG. 9 or FIG. 10 is only a block diagram of a part of a structure related to a solution of this application and does not limit the computer device to which the solution of this application is applied. Specifically, the computer device may include more or fewer components than those in the figures, or include a combination of some components, or include different component layouts.

In some embodiments, a computer device is provided, including a memory and one or more processors, the memory having computer-readable instructions stored therein, and the foregoing virtual scene image rendering method being implemented when the processor executes the computer-readable instructions.

In some embodiments, one or more readable storage media are provided, having computer-readable instructions stored therein, and the foregoing virtual scene image rendering method being implemented when the computer-readable instructions are executed by a processor.

In some embodiments, a computer program product is provided, including computer-readable instructions, and the virtual scene image rendering method being implemented when the computer-readable instructions are executed by one or more processors.

User information (including but not limited to user device information, user personal information, and the like) and data (including but not limited to data configured for analysis, stored data, displayed data, and the like) involved in this application are authorized by the user or fully authorized by all parties, and the collection, use and processing of relevant data need to comply with relevant laws, regulations and standards of relevant countries and regions.

A person of ordinary skill in the art may understand that all or some of the procedures of the methods of the foregoing embodiments may be implemented by computer-readable instructions instructing relevant hardware. The computer-readable instructions may be stored in a non-volatile computer-readable storage medium. When the computer-readable instructions are executed, the procedures of the embodiments of the foregoing methods may be included. Any reference to the memory, the database, or another medium used in the embodiments provided in this application may include at least one of a non-volatile memory and a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, or the like. The volatile memory may include a random access memory (RAM), an external cache, or the like. For the purpose of description instead of limitation, the RAM is available in a plurality of forms, such as a static random access memory (SRAM) or a dynamic random access memory (DRAM). The database involved in each embodiment provided in this application may include at least one of a relational database and a non-relational database. The non-relational database may include a blockchain-based distributed database, and the like, and is not limited thereto. The processor involved in each embodiment provided in this application may be a general-purpose processor, a central processing unit, a graphics processing unit, a digital signal processor, a programmable logic device, a quantum calculation-based data processing logic device, or the like, and is not limited thereto.

Technical features of the foregoing embodiments may be combined in different manners to form other embodiments. For concise description, not all possible combinations of the technical features in the foregoing embodiments are described. However, provided that combinations of the technical features do not conflict with each other, the combinations of the technical features are considered as falling within the scope recorded in this specification.

The foregoing embodiments merely express several implementations of this application. The descriptions are specific and detailed, but are not to be understood as a limitation to the patent scope of this application. A person of ordinary skill in the art may further make variations and improvements without departing from the concept of this application, and these shall all fall within the protection scope of this application. Therefore, the protection scope of this application shall be subject to the appended claims.

## Claims

1. A virtual scene image rendering method, performed by a computer device, the method comprising:
obtaining a first space position corresponding to a pixel point of a screen displaying a virtual scene;
determining, for the pixel point and from a plurality of light sources in the virtual scene, a target light source whose illumination area includes the virtual space position of the pixel point;
obtaining a second space position of the target light source;
performing ray tracing based on the position of the target light source and the position of the pixel point, to obtain lighting information of the target light source for the pixel point, the lighting information indicating whether a virtual ray generated by the target light source reaches the position of the pixel point; and
performing virtual scene image rendering on the virtual scene based on the lighting information, to obtain a virtual scene image rendering result.

2. The method according to claim 1, wherein the performing ray tracing based on the position of the target light source and the position of the pixel point, to obtain lighting information of the target light source for the pixel point comprises:
determining a ray tracing start location and a ray tracing end location based on the position of the target light source and the position of the pixel point;
determining a ray tracing step quantity based on the ray tracing start location and the ray tracing end location; and
performing ray tracing based on the ray tracing step quantity, to obtain the lighting information of the target light source for the pixel point.

3. The method according to claim 2, wherein the determining a ray tracing start location and a ray tracing end location based on the position of the target light source and the position of the pixel point comprises:
determining a direction pointing from the position of the pixel point to the position of the target light source, to obtain a ray tracing direction;
determining the position of the pixel point as the ray tracing start location; and
determining the ray tracing end location based on the ray tracing direction and a preset tracing distance.

4. The method according to claim 3, wherein the determining a ray tracing step quantity based on the ray tracing start location and the ray tracing end location comprises:
converting the ray tracing start location to preset two-dimensional space, to obtain a converted start location;
converting the ray tracing end location to the preset two-dimensional space, to obtain a converted end location;
determining a distance between the converted start location and the converted end location;
determining a tracing step quantity factor based on the distance between the converted start location and the converted end location; and
determining the ray tracing step quantity based on the tracing step quantity factor and a tracing step quantity threshold.

5. The method according to claim 4, wherein the tracing step quantity threshold comprises a preset minimum tracing step quantity and a preset maximum tracing step quantity, and the determining the ray tracing step quantity based on the tracing step quantity factor and a tracing step quantity threshold comprises:
multiplying the tracing step quantity factor by the maximum tracing step quantity, and using a multiplication result as a candidate tracing step quantity; and
using the minimum tracing step quantity as the ray tracing step quantity in a case that the candidate tracing step quantity is less than the minimum tracing step quantity; or
using the maximum tracing step quantity as the ray tracing step quantity in a case that the candidate tracing step quantity is greater than the maximum tracing step quantity.

6. The method according to any one of claims 3 to 5, wherein the performing ray tracing based on the ray tracing step quantity, to obtain the lighting information of the target light source for the pixel point comprises:
determining a ray tracing step length based on the preset tracing distance and the ray tracing step quantity;
performing sampling from the position of the pixel point at intervals of the ray tracing step length in the ray tracing direction, to obtain a plurality of sampling locations;
obtaining a depth value of each sampling location;
obtaining a depth value of a screen space location corresponding to each sampling location;
for each sampling location, determining a difference between the depth value of the sampling location and the depth value of the corresponding screen space location, to obtain a depth difference of the sampling location; and
obtaining the lighting information of the target light source for the pixel point based on a depth difference of each sampling location.

7. The method according to claim 6, wherein the obtaining the lighting information of the target light source for the pixel point based on a depth difference of each sampling location comprises:
determining a depth difference threshold based on a depth value of the ray tracing start location and a depth value of the ray tracing end location; and
in a case that a depth difference of any sampling location is less than or equal to the depth difference threshold, determining the lighting information of the target light source for the pixel point as a first preset value, the first preset value representing that the target light source does not illuminate the position of the pixel point; or
in a case that the depth difference of each sampling location is greater than the depth difference threshold, determining the lighting of the target light source for the pixel point as a second preset value, the second preset value representing that the target light source illuminates the position of the pixel point.

8. The method according to claim 7, wherein the determining a depth difference threshold based on a depth value of the ray tracing start location and a depth value of the ray tracing end location comprises:
using the depth value of the ray tracing start location as a starting depth value, and using the depth value of the ray tracing end location as an ending depth value;
determining a difference between the starting depth value and the ending depth value, to obtain a total depth difference; and
determining the depth difference threshold based on the total depth difference and the ray tracing step quantity.

9. The method according to any one of claims 1 to 8, wherein the determining, from a plurality of light sources in the virtual scene, a target light source whose illumination area includes the virtual space position of the pixel point comprises:
distributing a two-dimensional grid on a preset plane in a world space, the two-dimensional grid comprising a plurality of cells;
obtaining projection areas of respective illumination areas of the plurality of light sources in the virtual scene on the preset plane;
for each cell, obtaining a light source whose projection area has an intersection relationship with the cell from the plurality of light sources, to obtain a target light source cluster corresponding to the cell;
determining a matching light source cluster having an illumination impact on the pixel point from target light source clusters respectively corresponding to the cells; and
determining the target light source corresponding to the pixel point from the matching light source cluster having an illumination impact on the pixel point.

10. The method according to claim 9, wherein a quantity of light sources in each target light source cluster is less than or equal to a preset quantity.

11. The method according to claim 10, wherein the obtaining a light source whose projection area has an intersection relationship with the cell from the plurality of light sources, to obtain a target light source cluster corresponding to the cell comprises:
initializing a light source cluster of the cell;
determining the light source whose projection area has an intersection relationship with the cell from the plurality of light sources, to obtain an intersected light source of the cell;
adding the intersected light source into the light source cluster of the cell in a case that a quantity of light sources comprised in the light source cluster of the cell does not reach the preset quantity;
in a case that the quantity of light sources comprised in the light source cluster of the cell reaches the preset quantity, determining an impact degree representation value of the intersected light source of the cell for the cell, searching the light source cluster of the cell for a to-be-replaced light source, and replacing the to-be-replaced light source in the light source cluster of the cell with the intersected light source, the to-be-replaced light source being a light source whose impact degree representation value for the cell is less than the impact degree representation value of the intersected light source for the cell;
returning to the operation of determining the light source whose projection area has an intersection relationship with the cell from the plurality of light sources, to obtain an intersected light source of the cell until the plurality of light sources are traversed; and
in a case that the plurality of light sources are traversed, determining the light source cluster of the cell as the target light source cluster corresponding to the cell.

12. The method according to any one of claims 9 to 11, wherein the determining a matching light source cluster having an illumination impact on the pixel point from target light source clusters respectively corresponding to the cells comprises:
obtaining a projection location of the position of the pixel point on the preset plane;
determining a cell to which the projection location belongs, to obtain a target cell; and
determining a target light source cluster corresponding to the target cell as the matching light source cluster having an illumination impact on the pixel point.

13. The method according to any one of claims 1 to 12, further comprising:
forming cluster access information of the pixel point by using lighting information of each light source in the matching light source cluster of the pixel point for the pixel point;
determining each light source participating in virtual scene image rendering during rendering;
for each pixel point in the screen space, in a case that the matching light source cluster of the pixel point comprises at least one light source participating in virtual scene image rendering, obtaining lighting of the at least one light source participating in virtual scene image rendering for the pixel point from the cluster access information of the pixel point; and
performing virtual scene image rendering based on the lighting information of the at least one light source participating in virtual scene image rendering for the pixel point, to obtain the virtual scene image rendering result.

14. A virtual scene image rendering apparatus, comprising:
a first location determining module, configured to obtain a first space position corresponding to a pixel point of a screen displaying a virtual scene;
a light source determining module, configured to determine, for the pixel point and from a plurality of light sources in the virtual scene, a target light source whose illumination area includes the virtual space position of the pixel point;
a second location determining module, configured to obtain a second space position of the target light source;
an information obtaining module, configured to perform ray tracing based on the position of the target light source and the position of the pixel point, to obtain lighting information of the target light source for the pixel point, the lighting information indicating whether a virtual ray generated by the target light source reaches the position of the pixel point; and
a virtual scene image rendering module, configured to perform virtual scene image rendering on the virtual scene based on the lighting information, to obtain a virtual scene image rendering result.

15. A computer device, comprising a memory and one or more processors, the memory having computer-readable instructions stored therein, and the computer-readable instructions, when executed by the processor, performing the method according to any one of claims 1 to 13.

16. One or more readable storage media, having computer-readable instructions stored therein, the computer-readable instructions, when executed by a processor, performing the method according to any one of claims 1 to 13.

17. A computer program product, comprising computer-readable instructions, the computer-readable instructions, when executed by one or more processors, performing the method according to any one of claims 1 to 13.
